# DEMANDE DE BREVET EUROPEEN

(11) **EP 2 399 768 A2**
(43) Date de publication de la demande: **28.12.2011**
(21) Numéro de dépôt: 11166431.4
(22) Date de dépôt: 17.05.2011
(51) Int. Cl.: B60L 5/36

(54) **Système d'alimentation supérieure pour véhicule électrique et véhicule associé**

(30) Priorité: 18.05.2010 FR 1053828
(71) Demandeur: Robin, M. Claude, 95320 Saint Leu La Foret (FR)
(72) Inventeur: Robin, M. Claude, 95320 Saint Leu La Foret (FR)
(74) Mandataire: Marconnet, Sébastien

(57) **Abrégé**

L'invention concerne essentiellement un système d'alimentation pour véhicule électrique caractérisé en ce qu'il comprend un réseau de fils conducteurs parallèles entre eux, tendus parallèlement au sol au dessus de la voie de circulation, et/ou des lieux de stationnements, lesdits fils conducteurs étant reliés alternativement à chacun de deux pôles d'une source d'alimentation ou successivement aux trois pôles d'une alimentation triphasée ; au moins un capteur du véhicule électrique étant apte à coopérer avec lesdits fils, ledit capteur comportant au moins deux frotteurs de contact de dimension inférieure à l'intervalle entre deux fils, un dispositif d'aiguillage des potentiels recueillis par lesdits frotteurs permettant de relier électriquement chacun des frotteurs à l'un ou l'autre des pôles d'utilisation à bord du véhicule ou aux trois pôles d'utilisation à bord du véhicule.

## Description

La présente invention concerne notamment les systèmes d'alimentation pour des véhicules électriques en assurant non seulement la traction, mais également de préférence le stockage éventuel d'énergie.

Les véhicules électriques comportent généralement un moteur à propulsion électrique fonctionnant en alternatif ou continu et au moins une batterie de stockage de courant continu. L'énergie électrique nécessaire au moteur électrique peut être fournie notamment par l'intermédiaire de la batterie (en totalité ou en partie) et/ou par l'intermédiaire de fils, câbles ou rails électriques. L'invention s'applique plus particulièrement aux véhicules électriques alimentés en totalité ou partie par l'intermédiaire de fils, câbles ou rails électriques (ci-après dénommés fils d'une manière générale).

Les véhicules électriques actuels sont de deux types suivant qu'ils transportent ou non leur source d'énergie. Le premier type représenté par les trolleybus implique une liaison permanente au minimum bipolaire avec une infrastructure liée à la production d'électricité et une trajectoire imposée.
Le second type nécessite la présence à bord d'un moyen de stockage de l'énergie électrique sous forme chimique (accumulateurs), électrostatique (super-condensateurs), ou mécanique (volant d'inertie). Ces différents dispositifs de stockage imposent une recharge fréquente par connexion électrique, donc un stationnement en des lieux spécialement aménagés ou au garage.

L'application de la présente invention aux véhicules du premier type apporte la possibilité de se dépasser et de circuler obliquement par rapport aux conducteurs d'alimentation.

L'application de la présente invention aux véhicules de second type apporte la possibilité de recharger le dispositif de stockage d'énergie, en mouvement ou à l'arrêt conjointement ou non avec l'alimentation du ou des moteurs de propulsion.

Les performances de certains dispositifs de stockage d'énergie permettent d'obtenir une recharge conséquente en quelques minutes, et même quelques secondes seulement pour les super-condensateurs.

Le système d'alimentation pour véhicules selon l'invention comporte notamment une installation fixe comprenant plusieurs fils parallèles au sol et parallèles entre eux (au minimum deux) ; ces fils parallèles, lorsqu'ils sont trois ou plus sont de préférence sensiblement équidistants et reliés de préférence un sur deux aux deux pôles d'une source d'alimentation. Ils peuvent également être reliés successivement aux phases d'une source de courant alternatif polyphasé (par exemple trois fils pour une alimentation triphasée).

Au moins un capteur mobile coopère avec l'un au moins de ces fils parallèles. Le dit capteur comporte au moins deux frotteurs dont la plus grande dimension est inférieure à la distance entre deux fils parallèles en fonctionnement consécutifs (chaque frotteur ne doit de préférence toucher qu'un seul fil au même instant).

Au moins un frotteur est supporté par une structure isolante de dimension supérieure à la distance entre deux fils parallèles consécutifs, formant un glacis autour dudit frotteur qui est ainsi en légère saillie. Le capteur peut être rigide ou articulé pour occuper un volume restreint lorsqu'il n'est pas actif.

Les potentiels électriques recueillis par le contact des frotteurs avec les fils parallèles sont transmis par des organes de commutation électronique connus en soi pour l'alimentation du véhicule électrique.

L'invention concerne donc un système d'alimentation pour véhicule électrique comprenant un réseau de fils conducteurs parallèles entre eux, tendus parallèlement au sol au dessus de la voie de circulation, et/ou des lieux de stationnements, lesdits fils conducteurs étant reliés alternativement à chacun des pôles d'une source d'alimentation ; la source d'alimentation comportant trois pôles pour une alimentation en courant alternatif triphasé, au moins un capteur du véhicule électrique étant apte à coopérer avec lesdits fils, ledit capteur comportant au moins trois frotteurs de contact de dimension inférieure à l'intervalle entre deux fils, un dispositif d'aiguillage des potentiels recueillis par lesdits frotteurs permettant de relier électriquement chacun des frotteurs à l'un des pôles d'utilisation à bord du véhicule, caractérisé en ce que le dispositif d'aiguillage des potentiels est piloté pour relier trois fils parallèles consécutifs à trois bornes à bord du véhicule en respectant l'ordre des phases de la source de courant triphasé.

Selon une réalisation, le dispositif d'aiguillage comporte :
- des ensembles de trois semi-conducteurs associés chacun à un frotteur, et
- une logique de commande de ces ensembles de semi-conducteurs.

Selon une réalisation, la logique de commande comporte :
- des moyens pour mesurer les potentiels des frotteurs les uns par rapport aux autres,
- des moyens pour comparer des valeurs mesurées avec des valeurs d'une tension triphasée de référence,
- des moyens pour déterminer au minimum trois frotteurs porteurs des potentiels les plus proches des potentiels de la tension triphasée de référence, et
- des moyens pour commander trois semi-conducteurs de puissance de manière à réunir les fils conducteurs aux bornes d'utilisation.

Selon une réalisation, les moyens pour mesurer les potentiels des frotteurs les uns par rapport aux autres comportent :
- des diviseurs de tension reliés chacun à un frotteur, et
- un dispositif de transformation de la tension continue en une valeur numérique,
- les potentiels des frotteurs étant référencés par rapport à un point commun correspondant à la réunion de points homologues des diviseurs de tension.

Selon une réalisation, les frotteurs sont orientables angulairement par rapport au véhicule et éventuellement déplaçables longitudinalement par rapport au véhicule, pour rester en contact avec les dits fils parallèles.

Selon une réalisation, le capteur comporte quatre frotteurs orientables angulairement de sorte que trois d'entre eux au moins restent constamment en contact avec trois fils parallèles.

Selon une réalisation, le dispositif d'aiguillage des potentiels est composé de deux diodes par frotteur.

Selon une réalisation, le dispositif d'aiguillage des potentiels comporte un ou plusieurs semi-conducteurs commandés par frotteur par exemple de type triac ou IGBT.

L'invention concerne en outre un ensemble de toit caractérisé en ce qu'il comporte le capteur et le dispositif d'aiguillage du système d'alimentation selon l'invention.

Selon une réalisation, l'ensemble de toit comporte :
- une partie inférieure fixée sur le toit d'un véhicule comprenant le dispositif d'aiguillage, et
- une partie supérieure constituant le capteur,
- la partie supérieure étant reliée à la partie inférieure par l'intermédiaire d'un ensemble mécanique permettant l'élévation ou la rétractation de la partie supérieure.

Selon une réalisation, la partie inférieure comporte un système à ventouses.

Selon une réalisation, l'ensemble mécanique comporte une combinaison de bielles articulées et un vérin électrique.

La présente invention sera mieux comprise à l'aide des exemples de réalisation suivants décrits conjointement avec les figures qui représentent des descriptions ci-après qui concernent :
- la figure 1, un capteur à 5 frotteurs vu en coupe verticale ;
- la figure 2, une nappe de fils parallèles, un capteur à cinq frotteurs circulaires identiques représentés en vue de dessus dans deux positions caractéristiques différentes ;
- la figure 3, un dispositif de commutation comportant cinq paires de diodes ;
- la figure 4, un capteur à quatre frotteurs circulaires ;
- la figure 5, un capteur orientable comportant trois frotteurs rectilignes représentés dans trois positions caractéristiques différentes ;
- la figure 6, un dispositif de commutation spécifique d'une liaison triphasée comportant cinq groupes de trois semi-conducteurs de puissance et un dispositif de commande associé ;
- les figures 7a, 7b, 7c, respectivement des vues de côté, de face et de dessus d'une berline équipée d'un ensemble de toit hors zone de connexion ;
- les figures 8a, 8b, 8c, respectivement des vues de côté, de face et de dessus de la berline des figures 7a-7c connectée sous une infrastructure de fils parallèles ;

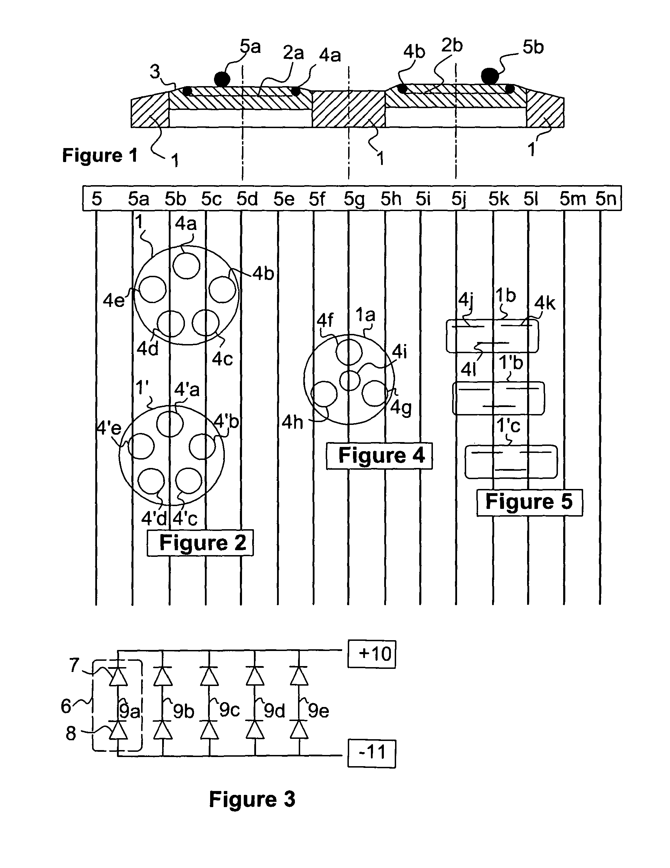

Sur la figure 1, est représenté en coupe verticale un capteur. Le capteur se compose d'une structure isolante 1 liée au véhicule et mobile verticalement. La structure 1 supporte au moins deux curseurs 2 dont deux seulement sont représentés en coupe. Chaque curseur est composé d'une structure isolante 3 comportant en partie supérieure un glacis conique, et d'un frotteur 4 en matériau conducteur en légère saillie sur la structure isolante 3. Les capteurs des Figures 2, 4 et 5 sont positionnés sous une nappe de fils parallèles 5a-5n.

Les frotteurs 4 ont un diamètre extérieur inférieur à l'intervalle entre deux fils parallèles 5 consécutifs. Les curseurs 2 sont poussés individuellement vers le haut par un ressort (non représenté) ou par tout autre procédé de type connu. Le frotteur 4 est ainsi maintenu en contact avec un seul fil parallèle 5 pendant que le véhicule se déplace horizontalement. Le contact est interrompu lorsque le dit frotteur 4 ne se trouve plus sous un fil parallèle. La structure isolante 2 est alors en contact par son glacis conique 3 avec un ou deux fils parallèles 5.

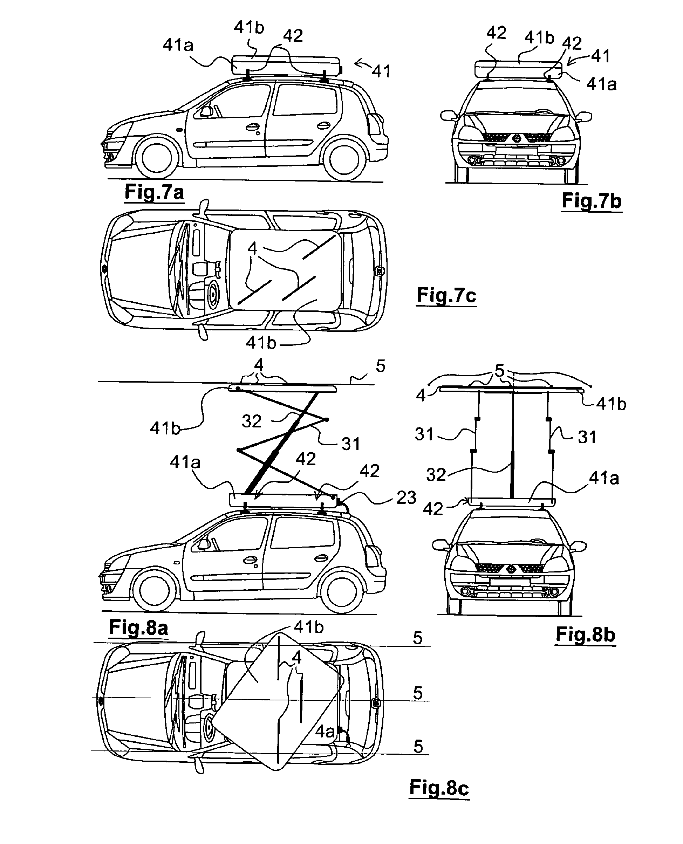

On pourra pour plus de détails sur le principe général de fonctionnement se référer à l'addition 93161 au brevet français 1 481 953, et en particulier aux figures 5 et 8.

Sur la figure 2 sont représentés en vue de dessus, plusieurs fils parallèles 5 5a-5n, un premier capteur 1, et un second capteur 1' identique au capteur 1 dans une position différente ainsi que les frotteurs 4 portés par les curseurs 2 des capteurs 1 et 1'.

Dans la position du premier capteur 1, on voit que les frotteurs 4a, 4b, et 4e sont en contact avec aucun fil parallèle, que le frotteur 4c est en contact avec le fil parallèle 5c, et que le frotteur 4d est en contact avec le fil parallèle 5b.

Dans la position du second capteur 1', on voit que les frotteurs 4c et 4d ne sont en contact avec aucun fil parallèle, que le frotteur 4'a est en contact avec le fil parallèle 5b, que le frotteur 4'b est en contact avec le fil parallèle 5c et que le frotteur 4'e est en contact avec le fil parallèle 5a.

Ainsi, quelle que soit la position horizontale ou angulaire d'un capteur tel que le premier capteur 1 au moins un premier frotteur 4a-4e est en contact avec un premier fil parallèle 5 et un second frotteur 4a-4e est en contact avec un second fil parallèle 5.

Sur la figure 3, sont représentés suivant leur schéma électrique plusieurs organes de commutation électronique unipolaire 6 et en 7 et 8 prenant la forme de semi-conducteurs de type diode. Ces diodes sont connectées d'une façon connue entre elles pour réaliser un pont de redressement polyphasé. Les points d'entrée 9 sont reliés chacun à un frotteur 4a-4e. Les sorties constituent le pôle positif 10 et le pôle négatif 11 de la source de courant utilisée par le véhicule.

De cette façon, le potentiel positif porté par un fil parallèle 5, 5a-5n est conduit au pôle positif 10 de la source de courant du véhicule, et le potentiel négatif porté par un fil parallèle 5, 5a-5n est conduit au pôle négatif 11 de la source de courant du véhicule. Si plusieurs fils parallèles 5, 5a-5n sont reliés en même temps au dispositif de commutation électronique, c'est le potentiel instantané le plus élevé qui est transmis.

Sur la figure 4 est représenté un capteur 1a comportant quatre curseurs 2 de diamètres différents.

Les frotteurs 4f, 4g, 4h, 4i des curseurs 2 sont en contact avec les fils parallèles 5, 5a-5n. On voit aisément qu'au moins deux des dits frotteurs sont en contact permanent avec deux fils parallèles 5, 5a-5n différents quelques soient les positions angulaires et transversales du capteur 1a.

Cette disposition permet un encombrement moindre qu'avec la disposition à cinq curseurs pour un même réseau de fils parallèles.

La figure 5 représente un capteur 1 b porteur de trois curseurs munis chacun d'un frotteur rectiligne 4j, 4k, 4l de longueur inférieure à la distance entre deux fils parallèles 5, 5a-5n consécutifs.

Un tel capteur 1 b est lié au véhicule et est mobile verticalement, en outre, ce capteur est positionné angulairement pour que les frotteurs restent sensiblement perpendiculaires aux fils parallèles 5, 5a-5n.

Le positionnement angulaire peut être obtenu par tout procédé bien connu de l'homme de métier.

Il est visible sur la figure 5 que dans les trois positions caractéristiques représentées, deux frotteurs au moins sont en contact avec deux fils parallèles consécutifs.

Il n'y a ainsi aucune interruption de contact lors d'un déplacement du véhicule notamment non parallèlement aux fils 5, 5a-5n.

De nombreuses variantes de réalisation, notamment concernant les formes et dispositions des frotteurs, peuvent être réalisés par l'homme de métier dérivant directement des informations décrites ci-dessus sans sortir du cadre de la présente invention: par exemple, on pourra utiliser des frotteurs en forme de secteurs maintenus en position active par des articulations et repliés dans un volume restreint en position d'attente.

Les fils parallèles 5, 5a-5n sont mis en oeuvre par exemple suivant le procédé connu utilisé pour les trolleybus ou les tramways avec un renforcement de la rigidité transversale pour supporter les efforts de frottement obliques ou perpendiculaires.

Les fils parallèles 5, 5a-5n peuvent également être constitutifs d'un grillage à large maille dont les fils de chaîne sont conducteurs et les fils de trame sont constitués d'un matériau isolant électrique.

L'intervalle horizontal entre les dits fils est déterminé en fonction du gabarit routier des véhicules et de la technologie des curseurs. En pratique, cet intervalle peut être un peu inférieur de préférence à 1 mètre et l'alimentation obtenue par raccordement aux trois phases d'un réseau de distribution basse tension, par exemple 230/400 V 50 Hz en France.

A titre d'exemple non limitatif, d'un curseur suivant la figure 2, pour une distance d entre les fils parallèles consécutifs 5, 5a-5n, chacun des frotteurs 4 pourra avoir un diamètre extérieur de l'ordre de 0,975 d et les centres des dits frotteurs seront situés par exemple aux cinq sommets d'un pentagone de côté de l'ordre de 1,025 d.

Cette disposition est optimale pour une alimentation en courant continu, mono ou triphasé.

La description ci-après est relative à une variante de l'invention lorsqu'on utilise une alimentation en courant triphasé.

Dans la disposition des frotteurs des figures 2 ou 4, ou bien en ajoutant un quatrième frotteur au capteur représenté sur la figure 5, on choisira les distances entre les frotteurs de manière à obtenir en permanence au moins un frotteur en contact avec 3 fils parallèles consécutifs.

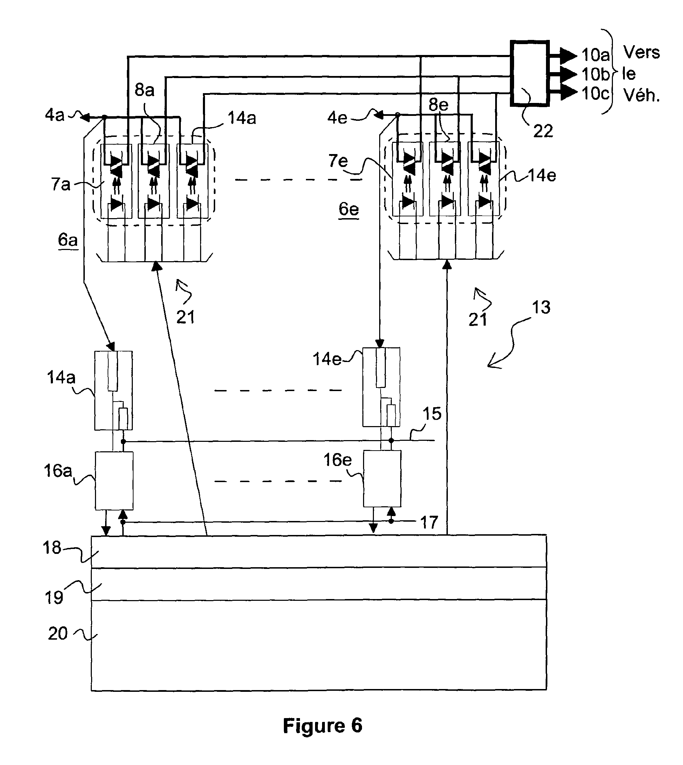

En connectant lesdits fils 5a, 5b, 5c aux 3 phases du réseau d'alimentation triphasé, et en commutant chaque semi-conducteur de puissance à l'aide d'une logique adaptée 13, on disposera à bord du véhicule de l'équivalent d'une liaison électrique triphasée de puissance cf Figure 6.

Dans l'exemple de la Figure 6, des ensembles de semi-conducteurs 6a-6e sont liés chacun respectivement à un même frotteur 4a-4e tels que représentés sur les Figures 2, 4 et 5. Ces ensembles 6a-6e commandés en puissance assurent la liaison respectivement entre les frotteurs 4a-4e et le circuit de puissance du véhicule.

Ces ensembles 6a-6e comportent respectivement des semi-conducteurs de puissance 7a, 8a, 14a-7e, 8e, 14e. Lesdits semi-conducteurs de puissance seront favorablement de type à couplage électro-optique, en l'occurrence des photo-triacs, pour éviter des potentiels élevés entre les éléments du circuit électronique de pilotage. En complément, les semi-conducteurs de puissance seront favorablement choisis parmi ceux de type connu qui assurent le début de la conduction à tension nulle. La figure 6 représente ainsi des photo-triacs 7 qui peuvent être directement actionnés par les tensions 21 issues du micro-processeur 20. De tels photo-triacs peuvent commander, avec séparation des sources, des semi-conducteurs de plus forte puissance.

Une logique 13 de commande, assure la commande des ensembles 6a-6e. Cette logique 13 de commande peut être constituée de circuits de type connu numérisant les 10 tensions existant par combinaison de chaque frotteur avec les quatre autres. De la comparaison de ces résultats, est déduite la combinaison de frotteurs réalisant la tension triphasée dans le sens désiré des phases. Cette combinaison est utilisée pour rendre conducteurs les semi-conducteurs de puissance nécessaires à la continuité de la liaison. Ladite combinaison est actualisée chaque fois qu'un frotteur quitte le contact avec le fil parallèle correspondant.

Les ensembles de semi-conducteurs 6a-6e et la logique 13 de commande forment le dispositif d'aiguillage selon l'invention.

Plus précisément, la logique 13 de commande comporte des diviseurs 14 de tension reliés d'une part aux frotteurs 4a-4e et d'autre part à des convertisseurs 16a-16e analogique/numérique par échantillonnage (CAN). Ces diviseurs 14 permettent d'adapter la tension recueillie par les frotteurs 4 à un niveau acceptable par les convertisseurs 16a-16e.

La fréquence d'échantillonnage de numérisation est adaptée à la vitesse maximale admissible en cas de déplacement perpendiculaire à l'orientation desdits fils parallèles. Celle-ci, obtenue sans difficulté avec les produits logiques courants, est par exemple de l'ordre de 1000 fois par seconde.

Par ailleurs, la logique 13 comporte une mémoire 18 tampon des résultats de numérisation ainsi qu'une mémoire 19 permanente stockant un logiciel de traitement des informations en relation avec un micro-processeur 20. De préférence, on utilise également un compteur 22 permettant de mesurer la consommation en électricité du véhicule.

Plusieurs signaux sont également référencés sur la figure 6. Ainsi, un neutre fictif référencé 15 est obtenu par la réunion des points homologues des diviseurs 14a-14e. Un signal référencé 17 assure le déclenchement simultanément de la numérisation de tous les convertisseurs 16a-16e. Les signaux 21 de commande assurent la commande des semi-conducteurs 7a, 8a, 14a de puissance. Il y a un signal 21 de commande par semi-conducteur.

On décrit ci-après le fonctionnement de la logique de commande des ensembles de semi-conducteurs.

La sortie de chaque diviseur 14 est une tension alternative qui est une image réduite de celle recueillie par le frotteur 4a-4e correspondant. Comme le potentiel du neutre n'est pas habituellement transmis, tous les potentiels sont référencés au point commun 15 de tous les diviseurs de tension 14a-14e.

C'est par calcul après numérisation que sont déterminés les potentiels réels des frotteurs 4a-4e les uns par rapport aux autres. A cet effet, le micro-processeur 20 déclenche périodiquement (par exemple toutes les millisecondes) la mesure simultanée des tensions via une émission du signal 17. Le convertisseur 16a-16e assure ainsi la transformation de la tension continue en une valeur numérique. Les potentiels des frotteurs 4a-4e sont référencés par rapport au neutre fictif 15.

Le logiciel élimine les mesures sans intérêt correspondant aux frotteurs 4a-4e qui ne sont en contact avec aucun fil conducteur 5.

La comparaison des valeurs mesurées avec celles calculées d'une tension triphasée de référence détermine au minimum trois frotteurs 4a-4e porteurs des potentiels les plus proches des potentiels de la tension triphasée de référence.

Le micro-processeur 20 génère alors les signaux 21 rendant conducteurs les trois semi-conducteurs de puissance 7a, 8a, 14a- 7e, 8e, 14e qui réuniront ainsi les fils conducteurs 5 aux bornes d'utilisation 10a-10c.

Un circuit de sécurité facultatif, non représenté, interdit que plus d'un semi-conducteur de puissance 7a, 8a, 14a-7e, 8e, 14e soit conducteur dans un même dispositif de commutation 6a-6e relié à un même frotteur 4a-4e.

Suivant les types de semi-conducteurs et les tensions et intensités à transmettre, il pourra être nécessaire d'utiliser des amplificateurs intermédiaires.

Quoique non impératif, un neutre réel obtenu au point commun de trois résistances reliées aux trois bornes 10a, 10b, 10c pourra être connecté au neutre fictif 17

Comme expliqué plus avant, lorsqu'un frotteur 4 quitte le contact d'un fil conducteur 5, un autre se trouve en parallèle et la continuité est assurée quels que soient les déplacements.

La tension triphasée est reliée aux appareils de protection et de comptage d'énergie 22 comme pour un branchement au réseau. L'énergie est disponible à partir des bornes 10a, 10b, 10c.

Il est à noter que ce même assemblage des mêmes composants de la figure 6, permet d'obtenir aux points 10a, 10b, 10c soit du courant alternatif triphasé, soit du courant alternatif monophasé, soit du courant continu de polarité choisie, par exemple deux tensions continues symétriques. Ceci par simple aménagement du logiciel approprié contenu dans la mémoire 19.

On note que la continuité de la liaison est assurée successivement sans interruption par chaque frotteur puis par le suivant. Il n'y a ainsi aucune coupure de courant circulant qui serait génératrice d'arc ou de perturbation électromagnétique.

Dans le même but, l'interruption de la liaison avant la sortie de la zone couverte par les fils parallèles, qu'elle soit automatique ou sur commande manuelle sera provoquée par la non activation des semi-conducteurs de puissance.

Les choix ci-dessus permettent d'avoir un minimum de perturbations sur le réseau et de parasites.

Le comptage en vue de la facturation de l'énergie consommée est aisément obtenu au moyen de l'utilisation du compteur 22 assorti ou non de télétransmission.

On note que les dispositifs d'articulation, de déploiement des capteurs, ainsi que les procédés de localisation, de guidage, d'orientation des véhicules et des capteurs mis en oeuvre dans l'invention ne sont pas décrits dans le détail mais pourraient facilement être réalisés par l'homme du métier.

Les Figures 7 et 8 montrent un véhicule équipé d'un ensemble de toit 41 amovible comportant un capteur 1 et le dispositif d'aiguillage du système d'alimentation selon l'invention. L'ensemble 41 est un accessoire rapporté à un véhicule électrique ou hybride nécessitant de préférence aucune transformation ou modification. En conséquence, après le retrait de l'ensemble 41, le véhicule retrouve son état initial après fabrication.

Les Figures 7 montrent ce dispositif dans une position rétractée dans laquelle les frotteurs 4 n'entrent pas en coopération avec les fils d'alimentation 5. Les Figures 8 montrent ce dispositif dans une position déployée dans laquelle les frotteurs 4 entrent en coopération avec les fils d'alimentation 5.

Plus précisément, l'ensemble 41 comprend une partie inférieure 41 a fixée, par exemple par de simples ventouses 42, sur la carrosserie qui n'a pas besoin d'être en acier. La partie inférieure 41 a contient les éléments détaillés sur la figure 6.

Le raccordement des points 10a, 10b, 10c à la batterie du véhicule est assuré par une embase 23 identique aux prises de courant domestiques de puissance dont l'usager peut disposer pour la recharge à domicile. On y raccorde le câble prévu à cet usage. Les branchements basse tension de petite puissance ne sont pas représentés.

L'ensemble 41 présente également une partie supérieure 41 b constituant un capteur 1 tel que décrit en figure 1 avec une disposition de frotteurs de la figure 5. Cette partie supérieure 41 b s'étend sensiblement suivant un plan parallèle au sol.

La partie supérieure 41b est reliée à la partie inférieure 41a par l'intermédiaire d'un ensemble mécanique permettant son élévation ou sa rétractation en restant sensiblement parallèle au sol. Une combinaison de bielles articulées 31 et un vérin électrique 32 permettent à l'ensemble mécanique d'assurer cette fonction. Un mouvement de rotation et éventuellement de translation sont également ajoutés.

Les commandes d'élévation, d'orientation, et de rétractation peuvent être automatiques, déclenchées lorsque le véhicule se trouve dans une zone équipée de l'infrastructure, ou manuelles puisque aucune précision n'est requise. Il suffit d'assurer la pression d'appui convenant à la qualité des contacts, et une orientation sensiblement perpendiculaire des frotteurs 4, par rapport aux fils parallèles d'alimentation 5.

De nombreuses variantes peuvent être imaginées comme par exemple :
- une disposition des frotteurs suivant les figures 2 ou 4 qui évitent l'obligation d'une rotation du capteur pour obtenir la continuité de la liaison, et/ou
- l'incorporation dans la partie 41 a des éléments électriques et électroniques d'une borne de recharge prévue pour la voie publique. Le raccordement au véhicule est alors le câble et le connecteur standardisés pour cet usage.

## Revendications

1. Un système d'alimentation pour véhicule électrique comprenant un réseau de fils conducteurs parallèles entre eux, tendus parallèlement au sol au dessus de la voie de circulation, et/ou des lieux de stationnements, lesdits fils conducteurs étant reliés alternativement à chacun des pôles d'une source d'alimentation ; la source d'alimentation comportant trois pôles pour une alimentation en courant alternatif triphasé, au moins un capteur du véhicule électrique étant apte à coopérer avec lesdits fils, ledit capteur comportant au moins trois frotteurs de contact de dimension inférieure à l'intervalle entre deux fils, un dispositif d'aiguillage des potentiels recueillis par lesdits frotteurs permettant de relier électriquement chacun des frotteurs à l'un des pôles d'utilisation à bord du véhicule, **caractérisé en ce que** le dispositif d'aiguillage des potentiels est piloté pour relier trois fils parallèles consécutifs à trois bornes à bord du véhicule en respectant l'ordre des phases de la source de courant triphasé.

2. Système selon la revendication 1, **caractérisé en ce que** le dispositif d'aiguillage comporte :
- des ensembles de trois semi-conducteurs associés chacun à un frotteur, et
- une logique de commande de ces ensembles de semi-conducteurs.

3. Système selon la revendication 2, **caractérisé en ce que** la logique de commande comporte :
- des moyens pour mesurer les potentiels des frotteurs les uns par rapport aux autres,
- des moyens pour comparer des valeurs mesurées avec des valeurs d'une tension triphasée de référence,
- des moyens pour déterminer au minimum trois frotteurs porteurs des potentiels les plus proches des potentiels de la tension triphasée de référence, et
- des moyens pour commander trois semi-conducteurs de puissance de manière à réunir les fils conducteurs aux bornes d'utilisation.

4. Système selon la revendication 3, **caractérisé en ce que** les moyens pour mesurer les potentiels des frotteurs les uns par rapport aux autres comportent :
- des diviseurs de tension reliés chacun à un frotteur, et
- un dispositif de transformation de la tension continue en une valeur numérique,
- les potentiels des frotteurs étant référencés par rapport à un point commun correspondant à la réunion de points homologues des diviseurs de tension.

5. Système selon l'une des revendications 1 à 4, **caractérisé en ce que** les frotteurs sont orientables angulairement par rapport au véhicule et éventuellement déplaçables longitudinalement par rapport au véhicule, pour rester en contact avec les dits fils parallèles.

6. Système selon l'une des revendications 1 à 5, **caractérisé en ce que** le capteur comporte quatre frotteurs orientables angulairement de sorte que trois d'entre eux au moins restent constamment en contact avec trois fils parallèles.

7. Système selon l'une des revendications 1 à 6, **caractérisé en ce que** le dispositif d'aiguillage des potentiels est composé de deux diodes par frotteur.

8. Système selon l'une des revendications 1 à 7, **caractérisé en ce que** le dispositif d'aiguillage des potentiels comporte un ou plusieurs semi-conducteurs commandés par frotteur par exemple de type triac ou IGBT.

9. Ensemble de toit **caractérisé en ce qu'**il comporte le capteur et le dispositif d'aiguillage du système d'alimentation selon l'une des revendications 1 à 8.

10. Ensemble de toit selon la revendication 9, **caractérisé en ce qu'**il comporte :
- une partie inférieure fixée sur le toit d'un véhicule comprenant le dispositif d'aiguillage, et
- une partie supérieure constituant le capteur,
- la partie supérieure étant reliée à la partie inférieure par l'intermédiaire d'un ensemble mécanique permettant l'élévation ou la rétractation de la partie supérieure.

11. Ensemble de toit selon la revendication 10, **caractérisé en ce que** la partie inférieure comporte un système à ventouses.

12. Ensemble de toit selon la revendication 10 ou 11, **caractérisé en ce que** l'ensemble mécanique comporte une combinaison de bielles articulées et un vérin électrique.
